# EUROPÄISCHE PATENTSCHRIFT

(11) **EP 1 055 457 B1**
(45) Veröffentlichungstag und Bekanntmachung des Hinweises auf die Patenterteilung: **31.05.2006**
(21) Anmeldenummer: 00109217.0
(22) Anmeldetag: 28.04.2000
(51) Int. Cl.: B01L 3/00, G01N 1/40, G01N 21/35

(54) **Probenträger für die IR-Spektroskopie von Probeflüssigkeiten**
Sample support for the infrared spectroscopy of sample fluids
Porte-échantillon pour la spectroscopie à infrarouge des échantillons liquides

(30) Priorität: 27.05.1999 DE 19919608
(43) Veröffentlichungstag der Anmeldung: 29.11.2000
(73) Patentinhaber: Roche Diagnostics GmbH, 68305 Mannheim (DE)
(72) Erfinder: Mischler, Rheinhold, 67063 Ludwigshafen (DE); Boecker, Dirk, Dr. Dr., 94306 Palo Alto (US)
(74) Vertreter: Pfeifer, Hans-Peter

(56) Entgegenhaltungen:
- WO-A-93/00580
- US-A- 5 164 598
- US-A- 5 605 838
- US-A- 5 882 465

## Beschreibung

Die vorliegende Erfindung betrifft einen Probenträger für die IR-Spektroskopie, der eine Probenaufgabezone sowie mindestens eine rillenförmige Vertiefung aufweist, in die Flüssigkeit aus der Probenaufgabezone infolge von Kapillarkräften hineingezogen wird. Weiterhin betrifft die vorliegende Erfindung ein Verfahren zur IR-Spektroskopie mit einem erfindungsgemäßen Probenträger sowie ein System zur IR-Spektroskopie unter Verwendung des erfindungsgemäßen Probenträgers.

Im Stand der Technik sind bereits Probenträger zur Durchführung einer IR-Spektroskopie bekannt, bei denen Probeflüssigkeit in eine Vertiefung gegeben und nach Eintrocknung der Probeflüssigkeit eine IR-spektroskopische Auswertung vorgenommen wird. Derartige Probenträger besitzen den Nachteil, daß für eine quantitative Auswertung eine präzise Dosierung der zumeist kleinen Probevolumina vorgenommen werden muß. Weiterhin tritt bei Probenträgern mit Vertiefungen der Effekt auf, daß proteinhaltige Flüssigkeiten einen Trocknungsring ausbilden, bei dem im Ringbereich eine relativ hohe Probenmenge vorliegt, während im Inneren des Rings nur sehr geringe Probenmengen anzutreffen sind. Dieses oder andere Trocknungsmuster können eine qualitative und quantitative Auswertung der Probeflüssigkeit mittels IR-Spektroskopie erschweren oder sogar vereiteln.

Im Stand der Technik sind weiterhin Probenträger für die IR-Spektroskopie bekannt, die die Form von Netzen aufweisen, auf die Probeflüssigkeit aufgegeben wird, so daß die Flüssigkeit in den Maschen des Netzes ausspreitet. Durch die Netze wird bereits eine Dosierung der Probeflüssigkeit in der Weise vorgenommen, daß bei bekannter Viskosität der Probe pro Masche ein spezifisches Probevolumen aufgenommen wird. Ein Nachteil derartiger Probenträger besteht jedoch darin, daß ihre Herstellung und Handhabung aufwendig sein kann.

Aus der WO 93/00580 ist ein Probenträger für die Infrarotspektroskopie bekannt, der von einer in einem Rahmen eingespannten Kunststoffolie gebildet wird. Die Kunststoffolie hat eine strukturierte Oberfläche mit Rillen oder anderen Vertiefungen. Zur Preparation einer Probe für eine infrarotspektroskopische Untersuchung wird eine flüssige Probe auf die strukturierte Oberfläche der Kunststoffolie aufgebracht und eingetrocknet.

Aufgabe der vorliegenden Erfindung war es, Probenträger vorzuschlagen, die einfach herzustellen sind, eine einfache Handhabung ermöglichen sowie eine relativ gleichmäßige und vorbestimmte Verteilung der Probe erzielen. Vorteilhaft können erfindungsgemäße Probenträger auch eine Dosierung der Probeflüssigkeit in der Weise zur Verfügung stellen, daß auf einer bestimmten Fläche des Probenträgers eine bestimmte Menge der Probeflüssigkeit wiedergefunden wird.

Erfindungsgemäße Probenträger für die IR-Spektroskopie weisen eine Probenaufgabezone sowie mindestens eine rillenförmige Vertiefung auf, in die Flüssigkeit aus der Probenaufgabezone infolge von Kapillarkräften hineingezogen wird. Bei einem erfindungsgemäßen Verfahren zur IR-Spektroskopie einer Probeflüssigkeit wird zunächst ein erfindungsgemäßer Probenträger zur Verfügung gestellt, auf die Aufgabezone des Probenträgers wird Probeflüssigkeit aufgegeben und die Zone des Probenträgers, in der sich die minstens eine rillenförmige Vertiefung befindet (Ausspreizzone), wird mit IR-Strahlung bestrahlt. Nachfolgend wird von der Ausspreizzone reflektierte oder durch die Ausspreizzone transmittierte Strahlung detektiert und zur Auswertung gebracht, um eine qualitative und/oder quantitative Analyse der Probeflüssigkeit durchzuführen.

Die Erfindung umfaßt weiterhin ein System zur Durchführung der IR-Spektroskopie einer Probeflüssigkeit mit den folgenden Elementen:
- Einen Probenträger mit einer Aufgabezone zur Aufgabe einer flüssigen Probe und einer mit der Aufgabezone verbundenen Ausspreizzone, die mindestens eine rillenförmige Vertiefung aufweist, in die Flüssigkeit aus der Probenaufgabezone infolge von Kapillarkräften hineingezogen wird,
- eine IR-Strahlungsquelle zur Bestrahlung zumindest eines Teils der Ausspreizzone des Probenträgers,
- einen Detektor zur Detektion der von der Ausspreizzone reflektierten oder durch die Ausspreizzone transmittierten Strahlung,
- eine Auswerteeinheit zur Auswertung der Detektorsignale zur qualitativen und/oder quantitativen Analyse der Probeflüssigkeit.

Erfindungsgemäße Probenträger besitzen eine Aufgabezone zur Aufgabe einer flüssigen Probe sowie eine Ausspreizzone. Diese beiden Einheiten sind gemeinsam auf dem Probenträger angeordnet und zumindest die Ausspreizzone, vorzugsweise jedoch sowohl Ausspreizzone als auch Aufgabezone sind von der Oberseite des Trägers zugänglich. Wenn der Probenträger zur Durchführung einer IR-Spektroskopie mittels Reflektionsspektroskopie verwendet werden soll, kann ein Material gewählt werden, das für IR-Strahlung im wesentlichen undurchlässig ist. Vorzugsweise wird der Probenträger zur Verwendung in einer Reflektionsspektroskopie mit einer Oberflächenbeschichtung versehen, die IR-Strahlung reflektiert, ohne sie wesentlich oder zumindest nicht spezifisch zu absorbieren. Hierdurch wird erreicht, daß das Reflektionssignal keine Beiträge von dem Material des Probenträgers erhält oder zumindest keine durch den Probenträger verursachten Absorptionsbanden auftreten. Eine Oberflächenbeschichtung des Trägers kann beispielsweise durch Bedampfen des Trägers mit Gold oder Aluminium erzielt werden.

Soll der Probenträger hingegen für eine Transmissionsspektroskopie verwendet werden, so werden Materialien verwendet, die Infrarotstrahlung nicht oder nur unwesentlich absorbieren. Geeignete Materialien sind beispielsweise Silicium, Germanium, Quarzglas und Alkalihalogenide. Insbesondere Halbleitermaterialien, wie Silicium und Germanium, sind vorteilhaft, da sie mit hoher Reinheit hergestellt werden können und Verfahren zur Behandlung ihrer Oberfläche aus der Halbleiterelektronik hinlänglich bekannt sind. Als Material für Probenträger kommen auch Kuststoffe in Betracht die im verwendeten IR-Bereich ausreichend für Strahlung durchlässig sind. Insbesondere hat sich gezeigt, daß Polyethylen in einigen Bereichen ausreichend durchlässig ist.

Die Probenaufgabezone erfindungsgemäßer Probenträger ist eine Vertiefung oder eine Kammer, in die Probeflüssigkeit gegeben werden kann.

Bei einer Probenaufgabezone in Form einer Vertiefung oder Kammer ist das Fassungsvermögen größer als die Aufnahmekapazität der rillenförmigen Vertiefung. Hierdurch wird sichergestellt, daß die Fluidmenge zur Auffüllung der rillenförmigen Vertiefung zunächst vollständig in der Probenaufgabezone abgelegt werden kann, bevor sie durch Kapillarkräfte in die rillenförmige Vertiefung hineingezogen wird. Das Fassungsvermögen der Probenaufgabezone liegt zwischen 0,1 und 5 µl. Die Probenaufgabezone mündet entweder direkt in die rillenförmige Vertiefung oder ist mit der rillenförmigen Vertiefung über einen Fluidkanal verbunden. Vorzugsweise ist die Probenaufgabezone so beschaffen, daß bei einer Probenaufgabe ohne weitere Maßnahmen und ohne besonders hohe Positionierungsanforderungen der Probenaufgabe eine Befüllung der rillenförmigen Vertiefung erreicht wird. Beispielsweise kann die Probenaufgabezone die Form eines sich nach unten verjungenden Napfes aufweisen, der in seinem unteren Bereich in einen Kanal mündet, der seinerseits mit der rillenförmigen Vertiefung verbunden ist. Da solch ein Probenträger herstellungstechnisch jedoch wegen des Kanals in der Fertigung aufwendiger ist, sind Probenträger bevorzugt, bei denen Probenaufgabezone und rillenförmige Vertiefung sowie gegebenenfalls ein Verbindungskanal gefertigt werden können, ohne daß hierbei Hinterschneidungen oder geschlossene Kanäle berücksichtigt werden müssen. Bei einem herstellungstechnisch günstigen Probenträger besitzt die Probenaufgabezone die Form eines Napfes, an den sich die rillenförmige Vertiefung direkt anschließt, d. h. im Bereich des Bodens der Probenaufgabezone mündet diese in die rillenförmige Vertiefung ein. Das Fassungsvermögen der Probenaufgabezone sollte so bemessen werden, daß bei Aufgabe eines bestimmten Volumens die Bodenfläche der Probenaufgabezone vollständig aufgefüllt wird, so daß sichergestellt werden kann, daß Probeflüssigkeit in den Bereich gelangt, der in die rillenförmige Vertiefung einmündet. Neben dem Fassungsvermögen der Probenaufgabezone sind auch Art der Probe (Viskosität, Oberflächenspannung) und die Beschaffenheit der Oberfläche der Probenaufgabezone von Bedeutung. Bevorzugt ist es, wenn die Probenaufgabezone eine Oberflächenspannung von größer als 80mN/m aufweist, damit die Probeflüssigkeit möglichst gut ausspreitet und so sichergestellt werden kann, daß sie in den Bereich gelangt, der in die rillenförmige Vertiefung mündet. Alternativ kann die Probenaufgabezone auch mit einem Material ausgefüllt sein, das ein Ausspreizen hervorruft, um wiederum sicherzustellen, daß die Probeflüssigkeit in den Bereich gelangt, aus dem sie infolge von Kapillarkräften in die rillenförmige Vertiefung gezogen wird. Geeignete Materialien sind beispielsweise Vliese oder saugfähige anorganische Schichten, wie z. B. Kieselgur, Aluminiumoxid usw..

In der vorliegenden Patentanmeldung wird der Bereich des Probenträgers als Auswertebereich bezeichnet, der de facto zur Auswertung durch IR-Bestrahlung herangezogen wird. Die Ausspreizzone ist hingegen der Bereich des Probenträgers, in dem sich die mindestens eine rillenförmige Vertiefung befindet. Der Auswertebereich kann bei erfindungsgemäßer Verwendung des Probenträgers sowohl größer als auch kleiner als die Ausspreizzone sein.

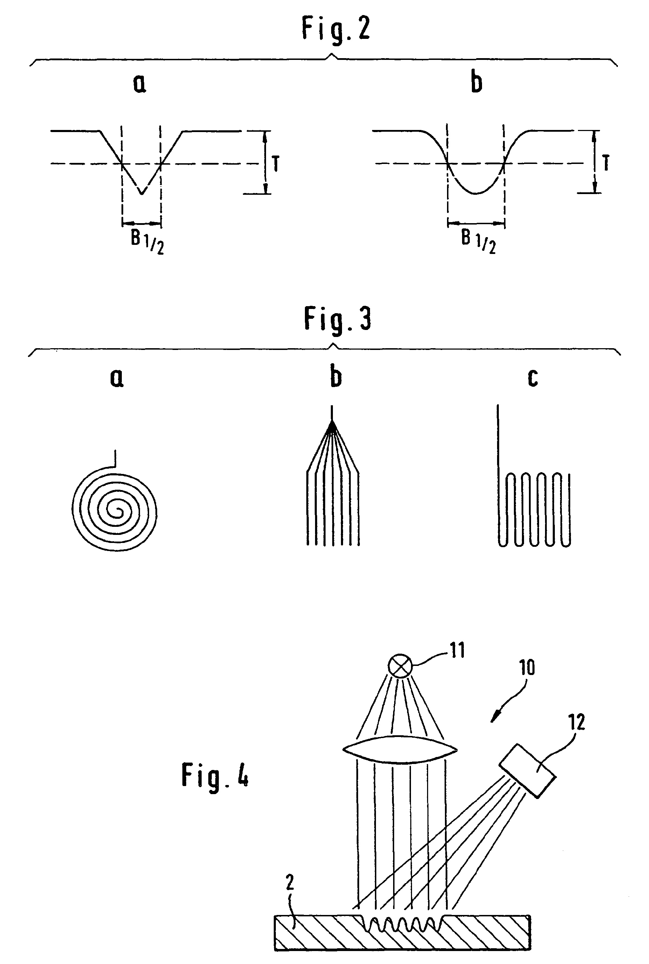

Ein wichtiger Aspekt der vorliegenden Erfindung ist die rillenförmige Vertiefung, die so beschaffen ist, daß Flüssigkeit durch Kapillarkräfte in sie aufgenommen wird. Erfindungsgemäß ist eine rillenförmige Vertiefung nach oben offen, so daß Flüssigkeit, die sich in der Vertiefung ausgebreitet hat, eintrocknet. Die Rille der rillenförmigen Vertiefung kann beispielsweise ein V-förmiges Profil oder ein sinusförmiges Profil aufweisen. Die Tiefe der Rille liegt typischerweise im Bereich von 10 µm bis 200µm. Weiterhin wichtig für die Funktion der rillenförmigen Vertiefung ist die sogenannte Halbwertsbreite. In den Figuren 2A und 2B sind eine V-förmige und eine sinusförmige Vertiefung im Querschnitt dargestellt. Die Halbwertsbreite (B_{½}) ist die Breite der Rille, bei der die Rille die Hälfte ihrer Gesamttiefe (T) aufweist. Im Rahmen der Erfindung bevorzugte Halbwertsbreiten liegen im Bereich von 10 bis 200µm. Ein guter Kapillareffekt wird in der Regel mit Rillenbreiten unter 100 µm erzielt. Um eine ausreichende Verteilung der Probe über eine ausreichend große Fläche zu erzielen, weist die rillenförmige Vertiefung vorzugsweise eine Länge von größer 5 cm auf und die Rille ist so gestaltet, daß die genannte Länge mit Probeflüssigkeit angefüllt wird, vorausgesetzt es wurde ausreichend Probeflüssigkeit appliziert. Ein weiterer Gesichtspunkt ist die flächenmäßige Dichte an Probeflüssigkeit, die durch die rillenförmige Vertiefung erzielt wird. Für die Verwendung des erfindungsgemäßen Probenträgers für die IR-Spektroskopie ist es wichtig, daß mittels der rillenförmigen Vertiefung eine ausreichende Probenmenge in den Auswertungsbereich des IR-Spektrometers gebracht werden kann. Aufgrund in der Regel rotationssymmetrischer Optiken ist der Strahlungskegel von IR-Spektrometern in der Regel kreisförmig, so daß erfindungsgemäß Probenträger bevorzugt sind, bei denen die rillenförmige Vertiefung in der Fläche so angeordnet ist, daß in einem kreisförmigen Bereich eine hohe Flächendichte erreicht wird. Dies ist insbesondere mit einer rillenförmigen Vertiefung erreichbar, die schneckenförmig bzw. spiralförmig angeordnet ist. Im Rahmen der Erfindung sind jedoch auch Anordnungen möglich, bei denen die rillenförmige Vertiefung Mäanderförmig angeordnet ist. Schließlich ist es noch möglich, vorzusehen, daß ausgehend von der Probenaufgabezone oder von einem Kanal, der mit der Probenaufgabezone verbunden ist, rillenförmige Vertiefungen abzweigen, die im Auswertebereich parallel zueinander verlaufen und so eine hohe Flächendichte von Probe in diesem Bereich zur Verfügung stellen. Bei den genannten Ausführungsformen wird vorzugsweise ein Auswertebereich von kleiner als 3 cm² gebildet, der durch eine enge Anordnung von rillenförmigen Vertiefungen entsteht. In Figur 3 sind exemplarisch flächenmäßige Anordungen der rillenförmigen Vertiefung gezeigt.

Für den Bereich der rillenförmigen Vertiefung können vorteilhaft hydrophile Stoffe oder hydrophil beschichtete Stoffe eingesetzt werden, deren Oberflächenspannung vorzugsweise kleiner als 80 mN/m ist.

Die Herstellung erfindungsgemäßer Probenträger kann beispielsweise nach einem der folgenden Verfahren erfolgen:

Ein Block oder eine Platte aus Probenträgermaterial wird vorgelegt und in diesen werden mit einer Hochgeschwindigkeitsmaschine Kanäle für die rillenförmige Vertiefung und ein Napf für die Probenaufgabezone hineingefräst. Weiterhin kann die Struktur von Probenaufgabezone und rillenförmiger Vertiefung in eine Platte oder dergleichen hineingeprägt werden. Dies ist insbesondere bei dickeren Aluminiumfolien oder anderen Metallfolien gut möglich. Weiterhin können die Probenträger im Spritzgußverfahren hergestellt werden. Schließlich ist es auch möglich, die Kanäle bzw. Vertiefungen in den Probenträger hineinzuätzen, wie dies beispielsweise für Silizium und Germanium im Stand der Technik hinlänglich bekannt ist.

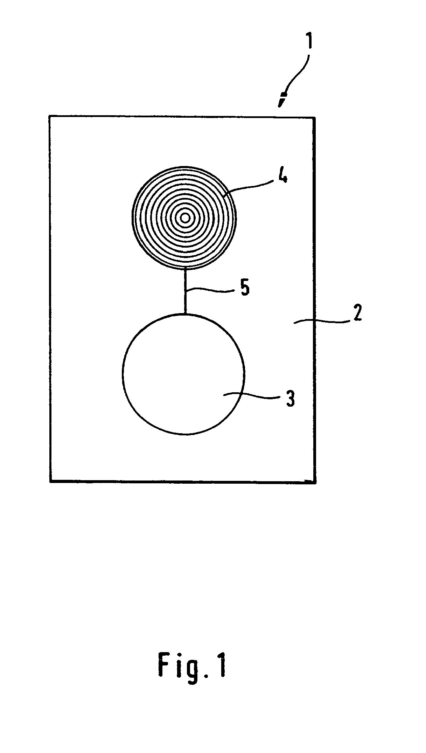

Aufbau und Funktionsweise eines erfindungsgemäßen Probenträgers werden anhand der Figur 1 näher erläutert:

Der dargestellte Probenträger (1) besitzt einen Halter (2), auf dem eine Probenaufgabezone (3) und eine rillenförmige Vertiefung (4) angeordnet sind, die über einen Kanal (5) miteinander verbunden sind. Der dargestellte Probenträger ist aus dem Kunststoff Polymethylmethacrylat hergestellt worden. Der Bereich der rillenförmigen Vertiefung (4) wurde nachfolgend durch Aufdampfen von Aluminium beschichtet. Die Vertiefungen des Probenträgers, die Probenaufgabezone, Kanal (5) und rillenförmige Vertiefungen weisen keine Hinterschneidungen auf. Die Probenaufgabezone weist einen Durchmesser von 0,5 cm und eine Tiefe von 1 mm auf. Der Kanal besitzt eine Tiefe von 0,1 mm und eine Breite von 100 µm. Der Auswertebereich, der durch die spiralförmig aufgewickelte, rillenförmige Vertiefung (4) gebildet ist, weist einen Durchmesser von 0,3 cm auf. Der dargestellte Probenträger ist zur Auswertung von Vollblut vorgesehen. Für dieses Probenmaterial wurde eine rillenförmige Vertiefung mit einer Tiefe von 0,4 mm und einer Halbwärtsbreite von 0,2 mm gewählt. Die Länge der dargestellten rillenförmigen Vertiefung beträgt ca. 5 cm.

Figur 4 zeigt ein System zur IR-Spektroskopie mit einem erfindungsgemäßen Träger. Infrarotspektroskopie mit Probenträgern, auf denen eine Flüssigkeitsprobe vor der Auswertung eingetrocknet wird, sind im Stand der Technik bekannt. Im Rahmen der vorliegenden Erfindung wird insbesondere auf das US-Patent 5,605,838 Bezug genommen. Figur 4 zeigt ein System (10) mit einer IR-Strahlungsquelle (11), mit der der Auswertebereich eines erfindungsgemäßen Probenträgers (2) bestrahlt wird, in dem die rillenförmigen Vertiefungen angeordnet sind. Von dem Probenträger reflektierte Strahlung wird mit dem Detektor (12) detektiert und kann mit einer Auswertevorrichtung ausgewertet werden. Das erfindungsgemäße System kann verwendet werden, um das IR-Spektrum einer Probe aufzunehmen, oder auch um die quantitative Bestimmung eines oder mehrerer Analyten zu ermöglichen.

Bei einem Verfahren zur IR-Spektroskopie einer Probeflüssigkeit wird zunächst Probe auf die Aufgabezone des Probenträgers gegeben, die infolge von Kapillarkräften in die rillenförmige Vertiefung des Probenträgers hineingezogen wird. Die in der rillenförmigen Vertiefung vorhandene Probe wird nunmehr weitestegehend eingetrocknet, was durch Anlegen eines Vakuums oder Aufbewahrung des Trägers in trockener Atmosphäre unterstützt werden kann. In der Regel ist es jedoch hinreichend, den Träger für mehrere Minuten in gewöhnlicher Atmosphäre aufzubewahren, um eine hinreichende Trocknung zu bewirken. Wie in US-5,605,838 beschrieben, ist eine Trocknung bevorzugt, bei der der Lösungsmittelgehalt der Probe, in der Regel der Wasseranteil nicht vollständig entfernt, jedoch auf unter 20 Gew.% reduziert wird. Nach dem Trocknen oder auch zur Unterstützung der Trocknung wird die Auswertezone des Trägers mit IR-Strahlung bestrahlt und von der Auswertezone reflektierte oder durch die Auswertezone transmittierte Strahlung mit einem Detektor detektiert. Geeignete Strahlungsquellen und Detektoren zur Auswertung von IR-Spektren sind im Stand der Technik hinlänglich bekannt.

## Patentansprüche

1. Probenträger für die IR-Spektroskopie mit einer Probenaufgabezone (3) in Form einer Vertiefung oder einer Kammer zur Aufgabe einer flüssigen Probe und einer Ausspreizzone, die mindestens eine rillenförmige Vertiefung enthält, die nach oben offen ist, so daß Flüssigkeit, die sich in der mindestens eine rillenförmigen Vertiefung (4) ausgebreitet hat, eintrocknen kann, wobei die Probenaufgabezone (3) ein Fassungsvermögen Zwischen 0,1 µl und 5µl hat, so daß eine Fluidmenge zur Auffüllung der mindestens einen rillenförmigen Vertiefung (4) zunächst vollständig in der Probenaufgabezone (3) abgelegt werden kann, bevor sie durch Kapillarkräfte aus der Probenaufgabezone (3) in die mindestens eine rillenförmige Vertiefung (4) hineingezogen wird.

2. Probenträger gemäß Anspruch 1, bei dem die mindestens eine rillenförmige Vertiefung (4) spiralförmig angeordnet ist.

3. Probenträger gemäß Anspruch 1, bei dem die mindestens eine rillenförmige Vertiefung (4) mäanderförmig angeordnet ist.

4. Probenträger gemäß Anspruch 1, der mehrere nebeneinander angeordnete Rillen (4) aufweist.

5. Probenträger gemäß Anspruch 1, bei dem die mindestens eine rillenförmige Vertiefung (4) im Querschnitt ein V-förmiges Profil aufweist.

6. Probenträger gemäß Anspruch 1, bei dem die mindestens eine rillenförmige Vertiefung (4) im Querschnitt ein sinusförmigen Profil aufweist.

7. Probenträger gemäß Anspruch 1, bei dem die Breite der rillenförmigen Vertiefung (4) kleiner als 100 µm ist.

8. Probenträger gemäß Anspruch 1, bei dem das Verhältnis von Breite zu Tiefe der rillenförmigen Vertiefung (4) 0,5 bis 2,0 beträgt.

9. Probenträger gemäß Anspruch 1, bei dem die Breite der Rille, bei der die Rille die Hälfte der Gesamttiefe der rillenförmigen Vertiefung (4) aufweist, 10 bis 200 µm beträgt.

10. Probenträger gemäß Anspruch 1, bei dem die Länge der rillenförmigen Vertiefung (4) größer als 5 cm ist.

11. Probenträger gemäß Anspruch 1, bei dem die Länge der mindestens einen Rille (4) bzw. der Rillen größer als 1 cm ist.

12. Probenträger gemäß Anspruch 1, bei dem zumindest der Bereich, in dem sich die mindestens eine rillenförmige Vertiefung (4) befindet, mit Aluminium oder Gold beschichtet ist.

13. Probenträger gemäß Anspruch 1, der aus einem Kunststoff durch einen Abformprozeß hergestellt ist.

14. System zur IR-Spektroskopie einer Probeflüssigkeit umfassend
- einem Probenträger (1,2) nach einem der vorhergehenden Ansprüche,
- einer IR-Strahlungsquelle(11) zur Bestrahlung des Probenträgers (1,2),
- einen Detektor (1,2) zur Detektion von dem Probenträger (1,2) reflektierter oder zur Detektion von durch den Probenträger (1,2) transmittierter Strahlung,
- eine Auswerteeinheit zur Auswertung von detektierter Strahlung zur qualitativen und/oder quantitativen Analyse der Probeflüssigkeit.

15. Verfahren zur IR-Spektroskopie einer Probeflüssigkeit mit den Schritten
- zur Verfügung stellen eines Probenträgers (1) nach einem der Ansprüche 1 bis 13,
- Aufgabe einer Flüssigkeit auf die Probenaufgabezone (3) des Probenträgers (1), wobei Flüssigkeit aus der Probenaufgabezone (3) infolge von Kapillarkräften in die mindestens eine villenformige Vertiefung (1) hineingezogen wird, sowie
- Eintrocknen der Probenflüssigkeit und
- Bestrahlung der eingetrockneten Probe im Bereich der Ausspreizzone mit IR-Strahlung,
- Detektion von dem Probenträger (1) reflektierter oder durch den Probenträger (1) transmittierter Strahlung,
- Auswertung der detektierten Strahlung zur qualitativen und/oder quantitativen Analyse der Probenflüssigkeit.

## Claims

1. Sample carrier for IR spectroscopy comprising a sample application zone (3), formed by a recess or by a chamber, for applying a liquid sample and comprising a spreading zone which comprises at least one groove-shaped recess (4), the recess being open at the top such that liquid which has spread in the at least one groove-shaped recess (4) can dry, wherein the sample application zone (3) has a holding capacity between 0.1 µl and 5 µl such that the liquid quantity required for filling the at least one groove-shaped recess (4) can initially be completely deposited in the sample application zone (3) before it is drawn by capillary forces out of the sample application zone (3) into the at least one groove-shaped recess (4).

2. Sample carrier according to claim 1, in which the at least one groove-shaped recess (4) is arranged in a spiral shape.

3. Sample carrier according to claim 1, in which the at least one groove-shaped recess (4) is arranged in a meander shape.

4. Sample carrier according to claim 1, which has several grooves (4) arranged next to one another.

5. Sample carrier according to claim 1, in which the at least one groove-shaped recess (4) has a V-shaped profile in cross-section.

6. Sample carrier according to claim 1, in which the at least one groove-shaped recess (4) has a sinus-shaped profile in cross-section.

7. Sample carrier according to claim 1, in which the width of the groove-shaped recess (4) is less than 100 µm.

8. Sample carrier according to claim 1, in which the ratio of the width to depth of the groove-shaped recess (4) is 0.5 to 2.0.

9. Sample carrier according to claim 1, in which the width of the groove at a depth which is half as deep as the total depth of the groove-shaped recess (4), is 10 to 200 µm.

10. Sample carrier according to claim 1, in which the length of the groove-shaped recess (4) is more than 5 cm.

11. Sample carrier according to claim 1, in which the length of the at least one groove (4) or the grooves is greater than 1 cm.

12. Sample carrier according to claim 1, in which at least the region in which the at least one groove-shaped recess (4) is located is coated with aluminium or gold.

13. Sample carrier according to claim 1, which is manufactured from a plastic by a moulding process.

14. System for carrying out IR spectroscopy of a sample liquid with:
- a sample carrier (1,2) according to any one of the preceding claims;
- a source of IR radiation (11) to irradiate the sample carrier (1,2);
- a detector (1,2) to detect the radiation that is reflected from the sample carrier (1,2) or to detect the radiation transmitted through the sample carrier (1,2);
- an evaluation unit to evaluate the detected radiation for the qualitative and/or quantitative analysis of the sample liquid.

15. Method for the IR spectroscopy of a sample liquid comprising the steps
- providing a sample carrier (1) according to any one of claims 1 to 13;
- applying liquid to the sample application zone (3) of the sample carrier (1), whereby the liquid from the sample application zone (3) is drawn into the at least one groove-shaped recess (4) as a result of capillary forces;
- drying of the sample liquid;
- irradiating the dried sample in the spreading area with IR radiation;
- detecting radiation that is reflected from the sample carrier (1) or transmitted through the sample carrier (1);
- evaluating the detected radiation for the qualitative and/or quantitative analysis of the sample liquid.

## Revendications

1. Porte-échantillon pour la spectroscopie à infrarouge avec une zone de d'introduction d'échantillons (3) sous la forme d'une cuvette ou d'une chambre pour l'introduction d'un échantillon liquide et avec une zone d'étalement, laquelle comprend au moins un évidement en forme de rainures qui est ouvert vers le haut, de sorte qu'un liquide qui s'est étalé dans l'au moins un évidement en forme de rainures (4) peut s'assécher, la zone d'introduction d'échantillons (3) ayant une capacité située entre 0,1 *µ*l et 5 *µ*l, de sorte qu'une quantité de fluide pour le remplissage de l'au moins un évidement en forme de rainures (4) peut d'abord être entièrement déposée dans la zone d'introduction d'échantillons (3) avant qu'elle ne soit aspirée par des forces capillaires hors de la zone d'introduction d'échantillons (3) jusque dans l'au moins un évidement en forme de rainures (4).

2. Porte-échantillon selon la revendication 1, **caractérisé en ce que** l'au moins un évidement en forme de rainures (4) est disposé en forme de spirale.

3. Porte-échantillon selon la revendication 1, **caractérisé en ce que** l'au moins un évidement en forme de rainures (4) est disposé en forme de méandres.

4. Porte-échantillon selon la revendication 1, **caractérisé en ce qu'**il comprend plusieurs rainures (4) disposées les unes à côté des autres.

5. Porte-échantillon selon la revendication 1, **caractérisé en ce que** la section de l'au moins un évidement en forme de rainures (4) a un profil en forme de V.

6. Porte-échantillon selon la revendication 1, **caractérisé en ce que** la section de l'au moins un évidement en forme de rainures (4) a un profil de forme sinusoïdale.

7. Porte-échantillon selon la revendication 1, **caractérisé en ce que** là largeur de l'évidement en forme de rainures (4) est inférieure à 100 *µ*m.

8. Porte-échantillon selon la revendication 1, **caractérisé en ce que** le rapport entre la largeur et la profondeur de l'évidement en forme de rainures (4) est de 0,5 à 2,0.

9. Porte-échantillon selon la revendication 1, **caractérisé en ce que** la largeur de la rainure, dans le cas de laquelle la rainure a la moitié de la profondeur totale de l'évidement en forme de rainures (4), est de 10 à 200 *µ*m.

10. Porte-échantillon selon la revendication 1, **caractérisé en ce que** la longueur de l'évidement en forme de rainures (4) est supérieure à 5 cm.

11. Porte-échantillon selon la revendication 1, **caractérisé en ce que** la longueur de l'au moins une rainure (4) ou des rainures est supérieure à 1 cm.

12. Porte-échantillon selon la revendication 1, **caractérisé en ce qu'**au moins la zone dans laquelle se trouve l'au moins un évidement en forme de rainures (4) est recouverte d'aluminium ou d'or.

13. Porte-échantillon selon la revendication 1, **caractérisé en ce qu'**il est réalisé en un matériau synthétique au moyen d'un processus de moulage.

14. Système pour la spectroscopie à infrarouge d'un échantillon liquide comprenant :
- un porte-échantillon (1, 2) selon l'une quelconque des revendications précédentes,
- une source de rayonnement infrarouge (11) à diffuser sur le porte-échantillon (1, 2),
- un détecteur (1,2) pour la détection d'un rayonnement réfléchi par le porte-échantillon (1, 2) ou pour la détection d'un rayonnement transmis par le porte-échantillon (1, 2),
- une unité d'exploitation pour l'exploitation d'un rayonnement détecté dans le but de réaliser une analyse qualitative et/ou quantitative de l'échantillon liquide.

15. Procédé pour la spectroscopie à infrarouge d'un échantillon liquide comprenant les étapes suivantes :
- mise à disposition d'un porte-échantillon (1) selon l'une quelconque des revendications 1 à 13,
- introduction d'un liquide dans la zone d'introduction d'échantillons (3) du porte-échantillon (1), le liquide étant aspiré par des forces capillaires hors de la zone d'introduction d'échantillons (3) jusque dans l'au moins un évidement en forme de rainures (4),
- assèchement de l'échantillon liquide,
- diffusion dans la zone d'étalement d'un rayonnement infrarouge sur l'échantillon séché,
- détection d'un rayonnement réfléchi par le porte-échantillon (1) et/ou transmis par le porte-échantillon (1) et
- exploitation du rayonnement détecté dans le but de réaliser une analyse qualitative et/ou quantitative de l'échantillon liquide.
